# EUROPEAN PATENT APPLICATION

(11) **EP 1 953 409 A1**
(43) Date of publication of application: **06.08.2008**
(21) Application number: 07425054.9
(22) Date of filing: 01.02.2007
(51) Int. Cl.: F16F 9/32, F16F 9/43

(54) **Method for manufacturing shock absorbers, and shock absorber obtained with the method**

(71) Applicant: PAIOLI S.p.A., 40019 S. Agata Bolognese (Bologna) (IT)
(72) Inventor: Pancaldi, Paolo, 40014 Crevalcore (IT)
(74) Representative: Alagem Modiano, Lara S.

(57) **Abstract**

A method for manufacturing shock absorbers of the type which comprises a cylinder inside which a piston, immersed in a fluid (F), is arranged slidingly. The cylinder has an opening for connection, by means of an appropriate duct, to a corresponding opening of an external reservoir (1) which also contains the fluid (F). The method consists in arranging the reservoir (1) in an interlocking configuration in a receptacle (14) arranged below a working unit (16); associating, below the working unit (16), in alignment with the reservoir (1), a respective closure plug (8) for the reservoir (1); producing a translational motion of the plug (8) within the reservoir (1) by means of the working unit (16), the plug (8) having a smaller diameter than the inside diameter of the portion of the reservoir (1) in which it is accommodated; introducing compressed gas (G) into the reservoir (1) through an appropriate pressurization circuit which leads to the annular passage provided between the plug (8) and the reservoir (1); deforming the mouth (10) of the reservoir (1), making it frustum-shaped with an end diameter which is smaller than the maximum diameter of the plug (8); moving mutually apart the working unit (16) and the receptacle (14). The plug (8) performs a translational motion until it rests, with forcing due to the high pressure inside a chamber (6) below the plug (8), on the inner part (9) of the deformed mouth (10).

## Description

The present invention relates to a method for manufacturing shock absorbers and to a shock absorber obtained with the method.

Vehicles of any kind are usually provided with suspensions which are designed to uncouple the wheels and the chassis of the vehicle in terms of vibrations and vertical oscillations.

Therefore, the user who is on board the vehicle, when the vehicle travels over an uneven surface (with holes or discontinuities of any kind), perceives forces which are greatly damped with respect to those experienced by the wheels indeed thanks to the presence of the suspensions.

The suspensions provide for the presence of an elastically acting element (generally a spring) and of a damping element, known as shock absorber.

The effect of the shock absorber is to damp the behavior of the elastically acting element (the reaction of which would be substantially instantaneous, except for inertial delays) to slow as much as possible the movements of the chassis with respect to the wheels, reducing the forces to which anyone traveling on the vehicle is subjected.

The shock absorber generally comprises a cylinder, within which a piston can slide: the cylinder generally contains a specific quantity of an appropriate fluid. To allow the piston to slide within the cylinder, the fluid must be transferred from the cylinder section that lies upstream of the head of the piston to the downstream section (or vice versa).

The transfer of fluid occurs by way of the presence of appropriate calibrated transfer ports, which determine the upper limit for the transfer rate, consequently limiting the speed with which the piston can slide within the cylinder.

Some types of shock absorber have an external reservoir (which acts as an accumulation chamber for the fluid), which is connected to the end portion of the cylinder by means of an appropriate duct.

In this manner, it is possible to minimize the dimensions of the cylinder (making it adapted even for installation in very small spaces, such as in motorcycles for example) without compromising its performance.

The known type of reservoir is constituted by a substantially cylindrical body which is closed at one end; a diaphragm can slide therein for separating an upper chamber (which contains compressed gas) from a lower chamber which contains the working fluid of the shock absorber. The diaphragm allows a perfect seal and prevents the exchange of fluids between the two chambers.

Above the upper chamber, which contains compressed gas, there is a closure plug: traditional plugs comprise an actual sealing plug, which is provided with respective perimetric gaskets and is adapted to isolate the inside of the reservoir from the outside environment, an annular element for locking the plug within the reservoir (generally this is a snap stop ring which is partially accommodated in a respective groove provided along the internal surface of the reservoir).

Above the actual plug and the annular element there is a decorative closure flap, which is rigidly coupled to the plug by means of a screw which engages within an appropriately provided central seat of said plug, optionally with the interposition of a rubber block.

The central seat of the plug allows, if pressure losses occur in the upper chamber of the compressed gas, to act with an appropriately provided nozzle to introduce gas, restoring the intended pressure: this operation in practice is definitely infrequent, also because a loss of pressure often entails the presence of sealing defects and therefore even the restoring action is only temporary.

The plurality of components that constitute the plug of the reservoir and the complexity of assembling them greatly increases production times and the associated costs.

The aim of the present invention is to provide a method for manufacturing shock absorbers which is quick and simple to perform.

Within this aim, an object of the present invention is to provide a shock absorber which has a reservoir with a simplified hermetic closure with optimum tightness.

Another object of the present invention is to provide a method for manufacturing shock absorbers and any shock absorber obtained with the method which has low costs and is safe in application.

This aim and these and other objects, which will become better apparent hereinafter, are achieved by the present method for manufacturing shock absorbers of the type which comprises a cylinder inside which a piston, which is immersed in a fluid, is arranged slidingly, said cylinder having an opening for connection, by means of an appropriate duct, to a corresponding opening of an external reservoir which also contains said fluid, characterized in that the method consists in arranging said reservoir in an interlocking configuration in a receptacle arranged below a working unit; associating, below said working unit, in alignment with said reservoir, a respective closure plug for said reservoir; producing a translational motion of said plug within said reservoir by means of said working unit, said plug having a smaller diameter than the inside diameter of the portion of the reservoir in which it is accommodated; introducing compressed gas into the reservoir through an appropriate pressurization circuit which leads to the annular passage provided between said plug and said reservoir; deforming the mouth of said reservoir, making it frustum-shaped with an end diameter which is smaller than the diameter of said plug; removing said working unit and said receptacle, said plug performing a translational motion until it rests, with forcing due to the high pressure inside the chamber below said plug, on the inner part of said deformed mouth.

Further characteristics and advantages of the invention will become better apparent from the following detailed description of a preferred but not exclusive embodiment of a method for manufacturing shock absorbers and of any shock absorber obtained with the method, illustrated by way of nonlimiting example in the accompanying drawings, wherein:

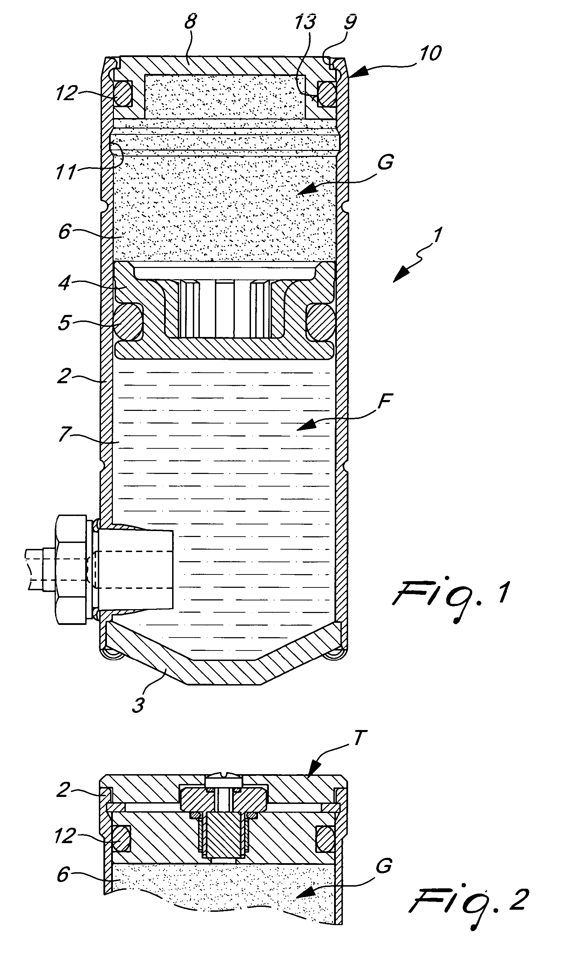

Figure 1 is a sectional side view, taken along a longitudinal plane, of a reservoir of a shock absorber according to the invention;
Figure 2 is a sectional side view, taken along a longitudinal plane, of a detail of the upper end of a reservoir of a shock absorber of the traditional type;

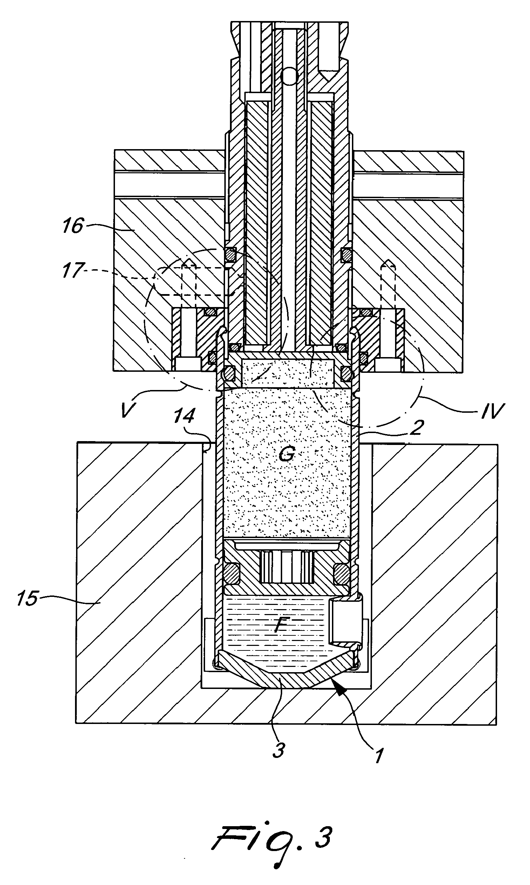

Figure 3 is a sectional side view, taken along a longitudinal plane, of a receptacle for a reservoir and a respective working unit for applying a closure plug according to the method of the invention in an initial step thereof;

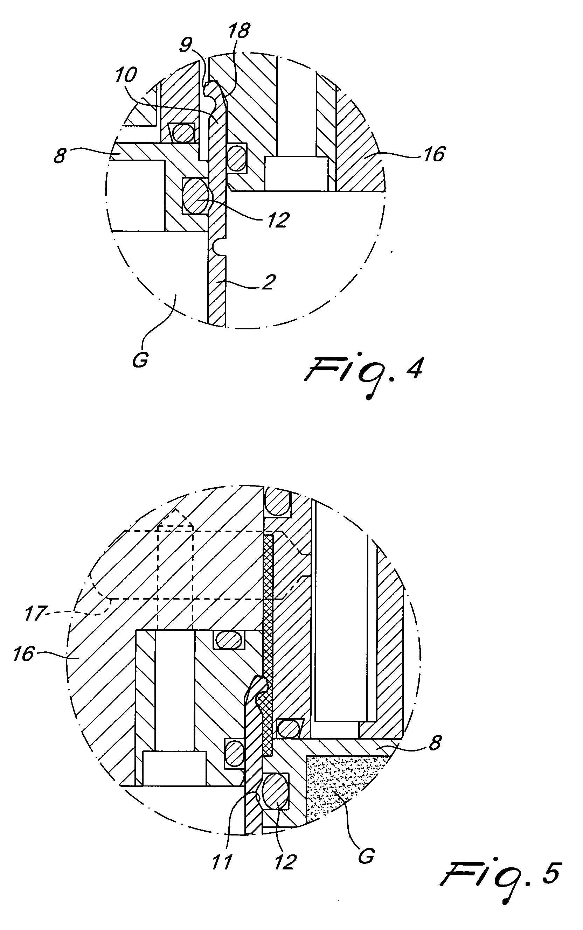

Figure 4 is a sectional side view, taken along a longitudinal plane, of the detail IV shown in Figure 3;
Figure 5 is a sectional side view, taken along a longitudinal plane, of the detail V shown in Figure 3;

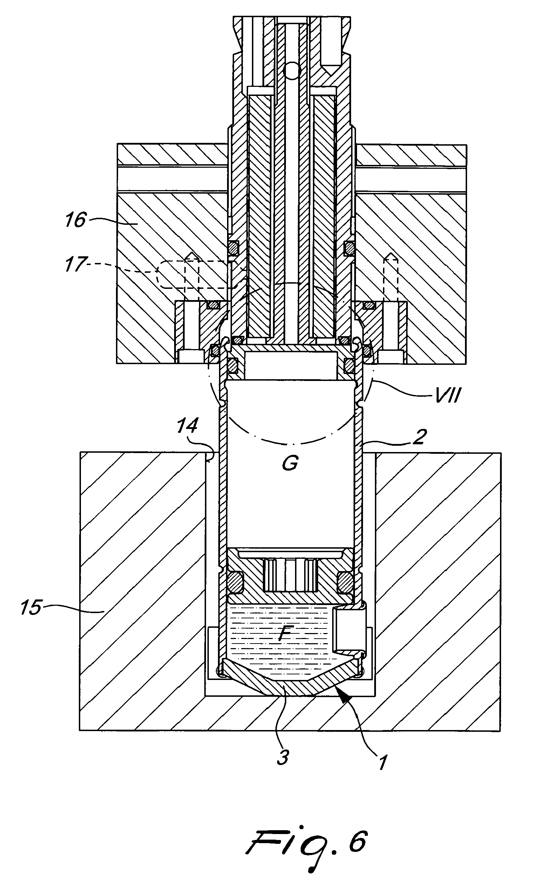

Figure 6 is a sectional side view, taken along a longitudinal plane, of a receptacle for a reservoir and a respective working unit for applying a closure plug according to the method of the invention in an intermediate step thereof;

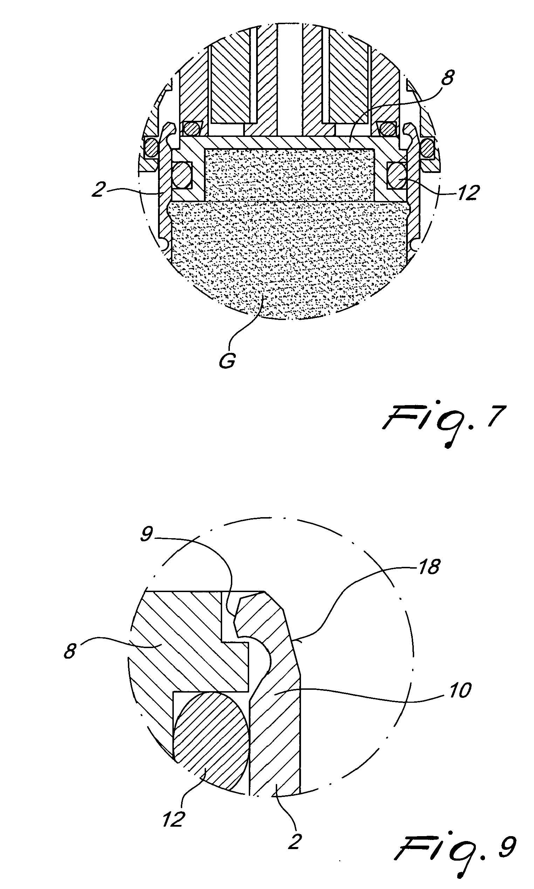

Figure 7 is a sectional side view, taken along a longitudinal plane, of the detail VII shown in Figure 6;

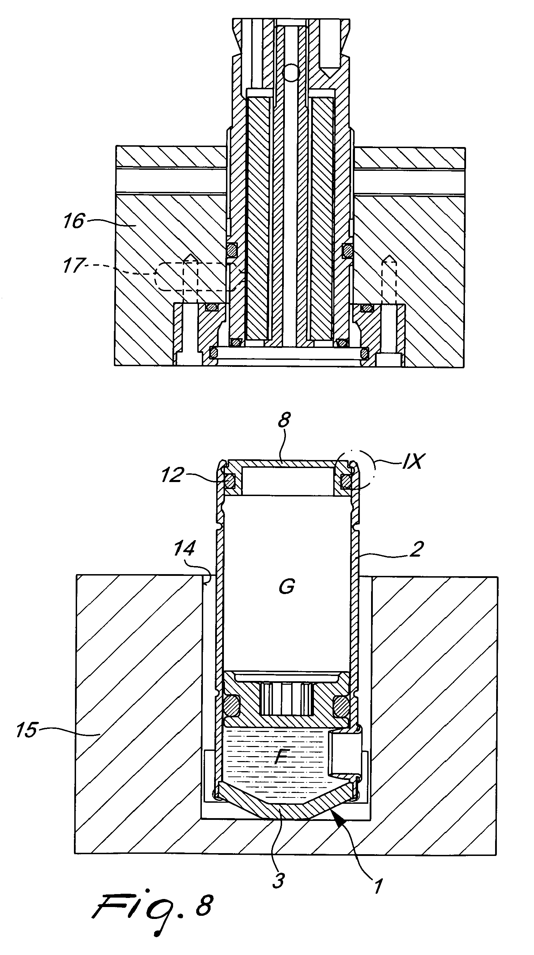

Figure 8 is a sectional side view, taken along a longitudinal plane, of a receptacle for a reservoir and a respective working unit for applying a closure plug according to the method of the invention in a final step thereof;
Figure 9 is a sectional side view, taken along a longitudinal plane, of the detail IX shown in Figure 8.

With reference to the figures, it is necessary to establish that the shock absorbers of interest are those of the type which comprises a cylinder within which a piston immersed in a fluid F (generally a low-viscosity oil) is arranged slidingly. Said cylinder has an opening for connection, by means of an appropriate duct, to a corresponding opening of an external reservoir 1, which also partly contains the fluid F and partly contains a compressed gas G.

The reservoir 1 comprises a substantially cylindrical body 2 which is closed in a lower region 3. The cylindrical body 2 accommodates internally a partition 4, which can perform a translational motion hermetically (by way of the presence of an appropriately provided annular gasket 5) within the internal cavity.

The partition 4 forms a first chamber 6, which lies above it (and contains the compressed gas G), and a second chamber 7, which lies below it (and contains the fluid F). The cylindrical body 2 also accommodates a sealing plug 8, which has a larger diameter, in at least one of its cross-sections, than the maximum diameter 9 of a mouth 10 of the body 2. The mouth 10 in fact substantially tapers: said taper ensures the locking of the plug 8 within the internal cavity of the body 2.

The body 2 further comprises a circular and perimetric internal groove 11, which lies below the mouth 10 and proximate thereto.

At the inner groove 11, the cylindrical body 2 has a larger diameter than the maximum diameter of the plug 8.

In turn, the plug 8 also comprises a toroidal sealing element 12 (made of a deformable material, for example such as rubber or other polymeric material), arranged along its lateral surface: the element 12 is in a perimetric configuration within an appropriately provided groove 13 of the plug 8.

The maximum diameter of the lateral surface of the plug 8 is slightly smaller than the inside diameter of the cylindrical body 2; the toroidal sealing element 12 protrudes radially from the plug 8 with overall dimensions which are larger than the inside diameter of the cylindrical body 2 and smaller than the inside diameter thereof at the inner groove 11.

This means that the plug 8 ensures the perimetric seal against the escape of the compressed gas G because the element 12 is forced and compressed against the internal surface of the body 2 and isolates the chamber 6 from the outside environment. However, when the plug 8, in assembly configurations which precede the pressurization of the chamber 6, is aligned with the slot 11, the element 12 no longer ensures tightness and the chamber 6 is connected to the outside.

The method for providing a shock absorber associated with the reservoir 1 entails arranging the reservoir 1, particularly the body 2 with the partition 4 inside it, in an interlocking configuration in the receptacle 14 of an appropriate manufacturing machine 15. The receptacle 14 is arranged below a working unit 16.

It is therefore necessary to associate below the working unit 16, in alignment with the cylindrical body 2, the respective closure plug 8 for the cylindrical body 2.

Once the body 2 and the plug 8 have been arranged, it is necessary to produce the translational motion, by way of a mutual approach of the working unit 16 and of the receptacle 14, of the plug 8 within the body 2. The plug 8 must be inserted within the body 2 until the toroidal element 12 is aligned with the groove 11.

At this point it is possible to introduce the compressed gas G within the reservoir 1 through an appropriate pressurization circuit 17 which leads to the annular port provided between the element 12 of the plug 8 and the bottom of the groove 11.

The movement of the receptacle 14 toward the unit 16 entails that the mouth 10 rests against the frustum-shaped surface 18 provided along the free stroke inside the unit 16: this forced contact produces a deformation of the mouth 10 until the frustum-shaped configuration is reached, with an end diameter 9 which is smaller than the maximum diameter of the plug 8.

Once complete pressurization (at the chosen pressure of the gas G) has been performed and the mouth 10 has been deformed as described, it is necessary to move the working unit 16 and the receptacle 14 away.

During this spacing movement, the plug 8 performs a translational motion until it rests, with forcing due to the high pressure in the chamber 6 below the plug 8, against the internal part of the deformed mouth 10.

Of course, in order to allow correct pressurization of the chamber 6, it is necessary to keep the plug 8 aligned with the groove 11 during the introduction of the compressed gas G within the chamber 6.

It has thus been shown that the invention achieves the proposed aim and objects.

The invention thus conceived is susceptible of numerous modifications and variations, all of which are within the scope of the appended claims.

All the details may further be replaced with other technically equivalent ones.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for manufacturing shock absorbers of the type which comprises a cylinder inside which a piston, which is immersed in a fluid (F), is arranged slidingly, said cylinder having an opening for connection, by means of an appropriate duct, to a corresponding opening of an external reservoir (1) which also contains said fluid (F), **characterized in that** the method consists in:
arranging said reservoir (1) in an interlocking configuration in a receptacle (14) arranged below a working unit (16);
associating, below said working unit (16), in alignment with said reservoir (1), a respective closure plug (8) for said reservoir (1);
producing a translational motion of said plug (8) within said reservoir (1) by means of said working unit (16), said plug (8) having a smaller diameter than the inside diameter of the portion of the reservoir (1) in which it is accommodated;
introducing compressed gas (G) into the reservoir (1) through an appropriate pressurization circuit which leads to the annular passage provided between said plug (8) and said reservoir (1);
deforming the mouth (10) of said reservoir (1), making it frustum-shaped with an end diameter which is smaller than the diameter of said plug (8);
moving mutually apart said working unit (16) and said receptacle (14), said plug (8) performing a translational motion until it rests, with forcing due to the high pressure inside a chamber (6) below said plug (8), on the inner part (9) of said deformed mouth (10).

2. The method according to claim 1, which consists in producing said deformation of the mouth (10) by means of a conical abutment portion (18) provided on a bottom of said unit (16), on which said mouth (10) rests with forcing when said unit (16) and said receptacle (14) undergo translational motions for mutual approach.

3. The method according to claim 1, which consists in keeping, during the introduction of compressed gas (G) within said chamber (6) of said reservoir (1), said plug (8) in alignment with the portion of the reservoir (1) whose diameter is larger than the diameter of said plug (8).

4. A shock absorber obtained according to the method of claim 1, of the type which comprises a cylinder within which a piston immersed in a fluid (F) is arranged slidingly, said cylinder having an opening for connection, by means of an appropriately provided duct, to a corresponding opening of an external reservoir (1), which also contains said fluid (F), **characterized in that** said reservoir (1) comprises a substantially cylindrical body (2) which is closed in a lower region (3) and accommodates internally a partition (3) which can perform a hermetic translational motion and delimits a first chamber (6) which lies above it and a second chamber (7) which lies below it, said body (2) also accommodating a sealing plug (8) which has a larger diameter, in at least one of its cross-sections, than the maximum diameter (9) of the end mouth (10) of said cylindrical body (2), which has a substantially tapering shape.

5. The shock absorber according to claim 4, **characterized in that** said cylindrical body (2) comprises a circular perimetric inner groove (11) below said mouth (10) and proximate thereto.

6. The shock absorber according to claim 5, **characterized in that** said cylindrical body (2) has, at said internal groove (11), an inside diameter which is larger than the maximum diameter of said plug (8).

7. The shock absorber according to claim 6, **characterized in that** said plug (8) also comprises a toroidal sealing element (12), which is arranged along the lateral surface thereof in a perimetric configuration within an appropriately provided groove (13).

8. The shock absorber according to claim 7, **characterized in that** said plug (8) has a maximum diameter of its lateral surface which is slightly smaller than the inside diameter of said cylindrical body (2), said toroidal sealing element (12) protruding radially from said plug (8) with a total space occupation which exceeds the inside diameter of said cylindrical body (2) and is smaller than the inside diameter at said internal groove (11).

## Amended claims

### Amended claims in accordance with Rule 137(2) EPC.

**1.** A method for manufacturing shock absorbers of the type which comprises a cylinder inside which a piston, which is immersed in a fluid (F), is arranged slidingly, said cylinder having an opening for connection, by means of an appropriate duct, to a corresponding opening of an external reservoir (1) which also contains said fluid (F), **characterized in that** the method consists in:
arranging said reservoir (1) in an interlocking configuration in a receptacle (14) arranged below a working unit (16);
associating, below said working unit (16), in alignment with said reservoir (1), a respective closure plug (8) for said reservoir (1);
producing a translational motion of said plug (8) within said reservoir (1) by means of said working unit (16), said plug (8) having a smaller diameter than the inside diameter of the portion of the reservoir (1) in which it is accommodated;
introducing compressed gas (G) into the reservoir (1) through an appropriate pressurization circuit which leads to the annular passage provided between said plug (8) and said reservoir (1);
deforming the mouth (10) of said reservoir (1), making it frustum-shaped with an end diameter which is smaller than the diameter of said plug (8);
moving mutually apart said working unit (16) and said receptacle (14), said plug (8) performing a translational motion until it rests, with forcing due to the high pressure inside a chamber (6) below said plug (8), on the inner part (9) of said deformed mouth (10).

**2.** The method according to claim 1, which consists in producing said deformation of the mouth (10) by means of a conical abutment portion (18) provided on a bottom of said unit (16), on which said mouth (10) rests with forcing when said unit (16) and said receptacle (14) undergo translational motions for mutual approach.

**3.** The method according to claim 1, which consists in keeping, during the introduction of compressed gas (G) within said chamber (6) of said reservoir (1), said plug (8) in alignment with the portion of the reservoir (1) whose diameter is larger than the diameter of said plug (8).

**4.** A shock absorber obtained according to the method of claim 1, of the type which comprises a cylinder within which a piston immersed in a fluid (F) is arranged slidingly, said cylinder having an opening for connection, by means of an appropriately provided duct, to a corresponding opening of an external reservoir (1), which also contains said fluid (F), whereby said reservoir (1) comprises a substantially cylindrical body (2) which is closed in a lower region (3) and accommodates internally a partition (3) which can perform a hermetic translational motion and delimits a first chamber (6) which lies above it and a second chamber (7) which lies below it, said body (2) also accommodating a sealing plug (8), **characterized in that** said sealing plug (8) has a larger diameter, in at least one of its cross-sections, than the maximum diameter (9) of the end mouth (10) of said cylindrical body (2), which has a substantially tapering shape, and **in that** said cylindrical body (2) comprises a circular perimetric inner groove (11) below said mouth (10) and proximate thereto.

**5.** The shock absorber according to claim 4, **characterized in that** said cylindrical body (2) has, at said internal groove (11), an inside diameter which is larger than the maximum diameter of said plug (8).

**6.** The shock absorber according to claim 5, **characterized in that** said plug (8) also comprises a toroidal sealing element (12), which is arranged along the lateral surface thereof in a perimetric configuration within an appropriately provided groove (13).

**7.** The shock absorber according to claim 6, **characterized in that** said plug (8) has a maximum diameter of its lateral surface which is slightly smaller than the inside diameter of said cylindrical body (2), said toroidal sealing element (12) protruding radially from said plug (8) with a total space occupation which exceeds the inside diameter of said cylindrical body (2) and is smaller than the inside diameter at said internal groove (11).
